Europäisches Patentamt

European Patent Office

Office européen des brevets

(11) Publication number: **0 411 670 A2**

# EUROPEAN PATENT APPLICATION

(21) Application number: 90115016.9

(51) Int. Cl.⁵: **G11B 23/03**

(22) Date of filing: 04.08.90

(30) Priority: 04.08.89 JP 203281/89

(43) Date of publication of application:
06.02.91 Bulletin 91/06

(84) Designated Contracting States:
**DE FR GB NL**

(71) Applicant: **MATSUSHITA ELECTRIC
INDUSTRIAL CO., LTD.**
**1006, Oaza Kadoma**
**Kadoma-shi, Osaka-fu, 571(JP)**

(72) Inventor: **Goto, Yoshikazu**

1-10-11, Nishikinya
Hirakata-shi, Osaka-fu(JP)
Inventor: **Kikuya, Satoshi**
21-7, Higashikori shimmachi
Hirakata-shi, Osaka-fu(JP)
Inventor: **Miyazaki, Benichi**
1-20-6-107, Shimeno
Neyagawa-shi, Osaka-fu(JP)

(74) Representative: **Eisenführ, Speiser &
Strassesse**
Martinistrasse 24
D-2800 Bremen 1(DE)

(54) **Disk cartridge.**

(57) A disk cartridge includes a rectangular flat housing (1) defined by top and bottom half housings (2, 3). An optical disk (4) is rotatably provided in the rectangular flat housing (1). The bottom half housing (2) has a motor opening (7) formed approximately at the center thereof so as to have an access to a center of the optical disk (4), and a head opening (8) of elongated configuration formed in a space between the motor opening (7) and one of four corners of the rectangular flat housing (1) so as to have an access to the optical disk (4) along a radial direction thereof. A shutter member (10) is provided which has a covering portion which extends partly over outer surface of the bottom half housing (2) and a holding portion (13a, 13b) slidably engaged on a first side of the rectangular flat housing (1). The shutter member (10) is arranged to move between a close position in which the covering portion (11) covers the motor and head openings (7, 8), and an open position in which the covering portion (11) uncovers the motor and head openings (7, 8).

Fig. 1a

## DISK CARTRIDGE

### BACKGROUND OF THE INVENTION

#### (Field of the Invention)

The present invention relates to a disk cartridge which contains a disk-shaped data storage medium and is used in such data storage devices as a data file device or image file device, and is particularly suited to a disk cartridge for a small diameter optical disk, but it will be appreciated that it is also useful in other application.

#### (Description of the Prior Art)

Disk cartridges of this type are provided with an opening to enable insertion of an externally located head to the disk inside the cartridge for reading and writing. A shutter is also provided to prevent dust and other foreign matter from entering the disk cartridge and adhering to the disk by sliding to cover the opening when the disk cartridge is not in use and to uncover the opening when the cartridge is in use. Because the size of any device in which this type of disk cartridge is used is limited by the size, particularly by the width, of the disk cartridge, it is desirable for the disk cartridge to have a small volume and narrow width in order to achieve a more compact drive device. Furthermore, if the direction in which the shutter slides is the same as the insertion direction of the cartridge, the shutter opening mechanism provided in the device can be simplified suitable to a compact design.

For example, Japanese Utility Model Patent Publication (examined) No. 63-49888, published December 21, 1988 discloses a disk cartridge having a shutter to cover the opening for reading and writing head. A cartridge housing comprises top half housing and bottom half housing for receiving therein a magnetic disk. Along with one side of the top half housing in the direction of cartridge insertion to the disk drive device, a recess for a shutter and a head opening for a magnetic head are both rectangularly formed in the outer surface of top half housing. The shutter is arranged to move in the orthogonal direction to the cartridge insertion. In the center of the bottom half housing, a motor opening for disk drive motor is formed.

According to the a disk cartridge of prior art as described hereinabove, the shutter is provided to open and close in a direction perpendicularly to the direction of insertion of the cartridge in to the disk drive. Thus, when a cartridge of this type is used with an optical head, which is larger than a magnetic head, the head opening must be made larger and it is therefore necessary to increase the width of the disk cartridge. Because the disk drive becomes accordingly larger, this design is disadvantageous to the development of a compact optical disk drive.

### SUMMARY OF THE INVENTION

The present invention has been developed with a view to substantially solving the above described disadvantages and has for its essential object to provide an improved disk cartridge which can be arranged in a compact size.

A disk cartridge according to the present invention comprises: a rectangular flat housing having first and second flat walls; a disk shaped recording medium rotatably provided in said rectangular flat housing; said first wall having a first opening formed approximately at the center thereof so as to have an access to a center of said recording medium, and a second opening of elongated configuration formed in a space between said first opening and one of four corners of said rectangular flat housing so as to have an access to said recording medium along a radial direction thereof; and a shutter member having a covering portion which extends partly over outer surface of said first wall and a holding portion slidably engaged on a first side of said rectangular flat housing, said shutter member being arranged to move between a close position in which said covering portion covers said first and second openings and an open position in which said covering portion uncovers said first and second openings.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:

Fig. 1a is a perspective view of a disk cartridge viewed from the bottom according to a first embodiment of the present invention;

Fig. 1b is a perspective view of a disk cartridge viewed from the top according to the first embodiment of the present invention;

Fig. 1c is a side elevational view of a disk cartridge according to the first embodiment of the present invention;

Fig. 1d is a perspective view showing inner surface of a bottom half housing of a disk cartridge according to the first embodiment of the present invention;

Fig. 2 is an exploded view of the disk cartridge shown in Fig 1a;

Fig. 3 is an exploded view of a disk cartridge drive unit to be applied for a disk cartridge according to the first embodiment of the present invention;

Fig. 4 is a plane view, viewed from the bottom, of a disk cartridge according to the first embodiment of the present invention when loaded in the disk drive unit of Fig. 3;

Fig. 5 is a plan view, viewed from the bottom, of a disk cartridge according to a second embodiment of the present invention when loaded in a modified disk drive unit of Fig. 3;

Figs. 6 and 7 are perspective views, viewed from the bottom and top, respectively, of a disk cartridge according to a third embodiment of the present invention;

Fig. 8 is an exploded view of a disk cartridge shown in Fig. 6; and

Fig. 9 is an exploded view of a disk cartridge according to a fourth embodiment of the present embodiment.

## DETAILED DESCRIPTION OF THE PREFERRED EMBODIMENTS

First embodiment

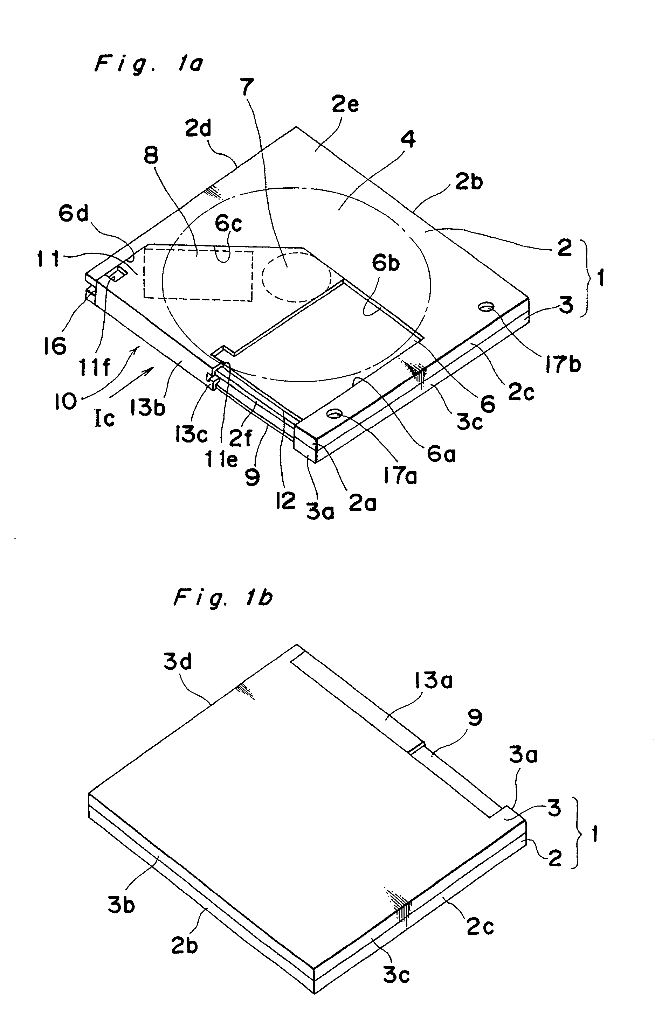

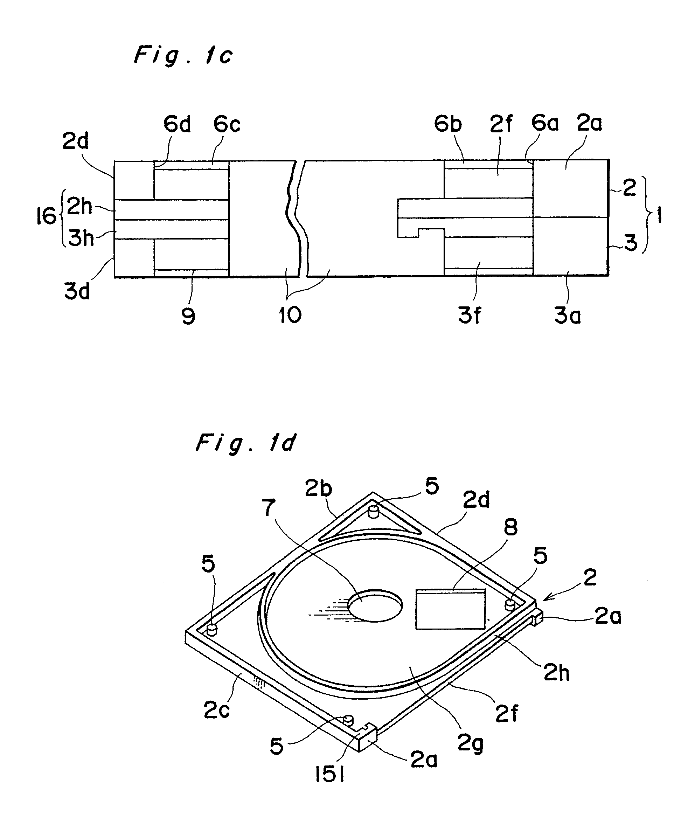

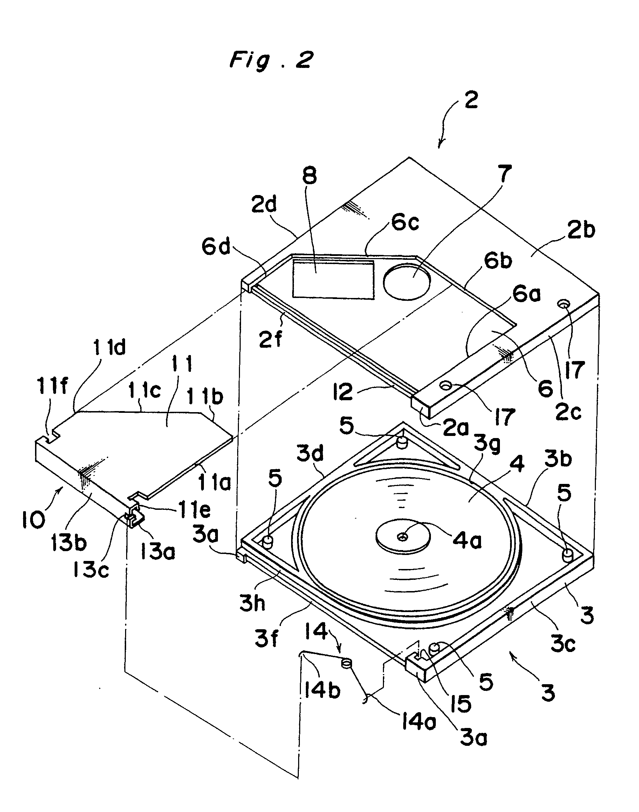

Referring to Figs. 1a, 1b, 1c, 1d and 2, a disk cartridge according to a first embodiment of the present invention is shown. The disk cartridge comprises a rectangular bottom half housing 2 having long sides 2a and 2b, short sides 2c and 2d, and a bottom face 2e enclosed by four sides 2a, 2b, 2c and 2d, a top half housing 3 also having long sides 3a and 3b, short side 2c and 2d, and a top face 3e enclosed by four sides 3a, 3b, 3c and 3d, a shutter 10 which is generally J-shaped in cross section and an optical disk 4 having at least one face, capable of being read and written by a suitable head accessed thereto, and such face is referred to as a data storing face. The bottom half housing 2 and the top half housing 3 are held together to make a flat rectangular cartridge housing 1 so as to enclose the optical disk 4.

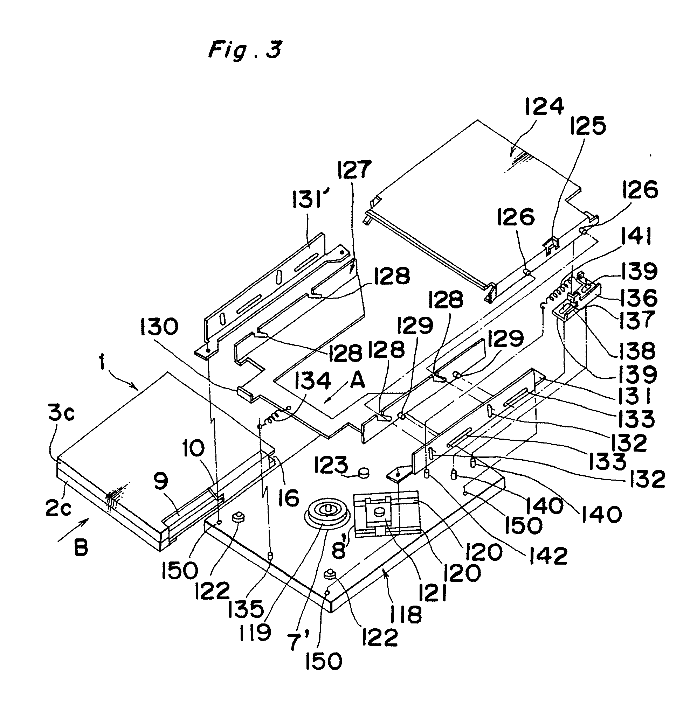

The bottom half housing 2, as best shown in Fig. 2, is formed with a motor opening 7 approximately in the center thereof for receiving an axis of disk drive motor 119 (Fig.3) which engages with a center hole 4a of the optical disk 4, and an elongated head opening 8 extending approximately along a diagonal line of the bottom half housing 2 such that an axial direction of the elongated head opening 8 is approximately in alignment with a line extending between the center of motor opening 7 and a corner of the bottom half housing 2. The elongated head opening 8 is provided for permitting an optical head 121 (Fig. 3) to access the optical disk 4.

The outer surface of the bottom half housing 2 is formed with a main recess 6 for receiving the shutter 10, and alignment holes 17a and 17b on the bottom face 2e at positions close to side 2c.

The main recess 6 widely extends along the side 2a of the bottom half housing 2, and is defined by four sides 6a, 6b, 6c and 6d. Side 6a extends parallel and adjacent to side 2c and start from side 2a and ends at midway between sides 2a and 2b, but closer to side 2b so that motor opening 7 can be completely included within the recess 6. Side 6b extends parallel to side 2b and starts from one end of side 6a and ends at midway between sides 2c and 2d, but closer to side 2d. Side 6c extends in a direction approximnately parallel to the direction in which the head opening 8 extends, so that an elongated side of the elongated head opening 8 extends parallel and adjacent to side 6c. Finally, side 6d extends parallel and adjacent to side 2d and starts from one end of side 6c and ends at side 2a. Furthermore, a side face 2f extending between sides 6a and 6d is inwardly recessed with respect to the side face 2a. A guide channel 12 is formed within the main recess 6 and extends parallel and closely adjacent to side face 2f.

As best shown in Fig. 1d, the inner surface of the bottom half housing 2 is formed with a tear-drop shaped recess 2g at about the center thereof for receiving the optical disk 4 such that the head opening 8 is located midway between the motor opening 7 and the pointing edge of the tear-drop shaped recess 2g. Furthermore, a step portion 2h is formed along the side face 2f and extending from side 2d to midway but closely adjacent to side 2c.

The top half housing 3 according to the first embodiment has no opening formed therein but has a number of recesses as explained below.

The outer surface of the top half housing 3 is formed with a subrecess 9 which widely extends along the side 3a of the top half housing 3. Furthermore, a side face 3f is inwardly recessed with respect to the side face 3a in a similar manner to the side face 2f described above.

As best shown in Fig. 2, the inner surface of the top half housing 2 is formed with a circle recess 3g at about the center thereof for receiving the optical disk 4. Furthermore, a step portion 3h is formed along the side face 3f and extending from side 3d to midway but closely adjacent to side 3c.

The bottom half housing 2 is held tightly together with the top half housing 3 by the adhesion, such as fusion bonding, of studs 5 provided in every corners of inside the bottom half housing 2 and also inside the top half housing 3 so as to provide the cartridge housing 1. It is to be noted that step portions 2h and 3h formed along sides 2a and 3a form a channel 16, as shown in Figs. 1a and 1c, which has one end opened at sides 2d and 3d and other end closed at midway of sides 2a and 3a but closes to sides 2c and 3c.

The shuter 10 is formed in generally J-shape in cross section and is defined by a covering plate 11, a support plate 13a parallel to the covering plate 11 and a side plate 13b extending between the covering plate 11 and the support plate 13a. The covering plate 11 is defined by four sides 11a, 11b, 11c and 11d which correspond to sides 6a, 6b, 6c and 6d, respectively, of the recess 6, provided that side 11b is much shorter than side 6b. Furthermore, covering plate 11 has cut-in portions for forming guide pawls 11e and 11f adjacent to side plate 13b. A spring hook 13c is formed at one end of side plate 13b.

The shutter 10 is slidably mounted on the cartridge housing 1 such that covering plate 11 is placed in main recess 6 and support plate 13a is placed in subrecess 9 with guide pawls 11e and 11f inserted in guide channel 12. A torsion spring 14 is provided beteween the top half housing 3 and shutter 10 such that one end 14a engages a slit 15 formed at a corner defined by sides 3a and 3c and other end 14b engages the spring hook 13c. The shutter 10 is provided to slide between a close position, as shown in Fig. 1a, in which sides 11c and 11d of covering plate 11 are held in contact with sides 6c and 6d of main recess 6, respectively, so that motor opening 7 and head opening 8 are completely covered by the covering plate 11, and an open position in which side 11a is held in contact with side 6a so that covering plate 11 is shifted to uncover the openings 7 and 8. Normally, shutter 10 is held in the close position by the urging force of the torsion spring 14.

Since shutter 10, particularly the covering plate 11, is tapered towards the free end 11b remote from the engaging end where guide pawls 11e and 11f are inserted in guide channel 12 and are held in the inserted position by support plate 13a, the covering plate 11 will not be easily deformed or bent and lifted above the main recess 6 even after a long term of use. Thus, shutter 10 can slide stably without providing any guiding means at the free end 11b.

Referring to Fig. 3, a disk drive unit for receiving the disk cartridge, according to the present invention, is shown. The disk drive unit comprises a chassis 118, a sliding plate 127 and a cartridge holder 124.

The chassis 118 has a round opening 7′ for receiving the axis of disk motor 119 and its associated members such as a turn table, a rectangular opening 8′ in which optical head 121 is movably placed in radial direction from the center of opening 7′. Fixedly mounted on chassis 118 are a pair of guide plate 131 and 131′ along opposite sides of chassis 118, respectively, each formed with vertical slots 132 and horizontal slots 133. Also, a control plate 136 having elongated slots 139 which engage with pins 140 is slidably mounted on chassis 118 to move towards direction B and direction A and is biased towards direction A by a spring 141 hooked to a pin 142.

The sliding plate 127 has substantially U-shaped configuration with facing side fins in which slanted grooves 128 are formed. Also, pins 129 extend outwardly from fins and are inserted in horizontal slots 133. Thus, sliding plate 127 slides in the horizontal directions A and B as the pins 129 slide along horizontal slots 133. The sliding plate 127 is normally biased toward direction A by a spring 134 hooked to a pin 135.

The cartridge holder 124 has opposite guide grooves between which cartridge housing 1 can be slidingly inserted in the direction B. An opening claw 125 extending inwardly of cartridge holder 124 is provided at the mid of one guide groove so that during the insertion of cartridge housing 1, opening claw 125 is slidingly guided along channel 16 of housing 1 and is held in contact with the edge of side plate 13b to push the shutter 10 from the close position towards the open position. The cartridge holder 124 further has pins 126 extending outwardly for the engagement with the slanted grooves 128 and also with the vertical slots 132, so that cartridge holder 124 can move only in the vertical direction as the pins 126 slide along vertical slots 132. Since sliding plate 127 is urged towards direction A, cartridge holder 124 is biased downwardly to chassis 118. Normally, when the cartridge housing 1 is not inserted, control plate 136 is placed under the cartridge holder 124 such that edge 138 of control plate 136 is held in contact with the bottom edge of cartridge holder 124, so that cartridge holder 124 is held in the lifted up position.

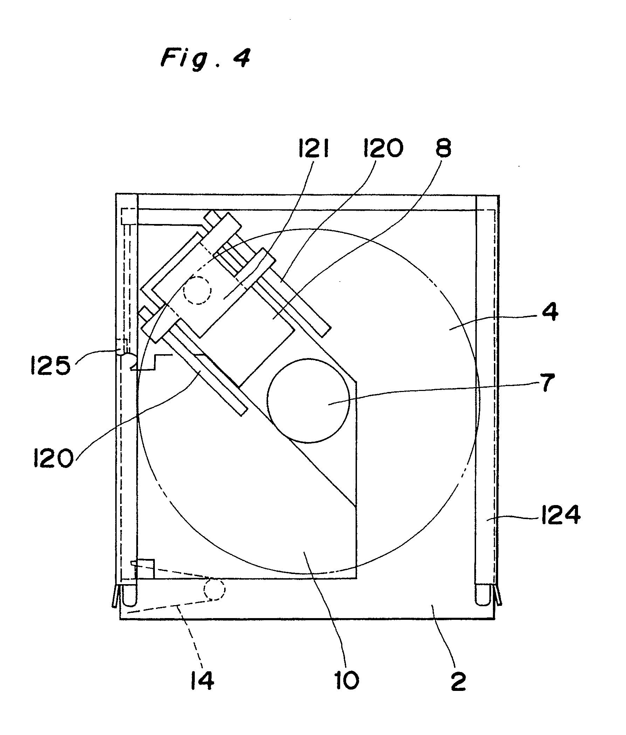

In operation, as the disk cartridge 1 is manually inserted in the disk drive unit in the direction B, the opening claw 25 contacts the shutter 10 which accordingly moves from the close position to open position. A further insertion of disk cartridge 1 results in contact between the inserting end of cartridge 1 and a release flange 137 of control plate 136, thus removing control plate 136 away from cartridge holder 124. Then, by the movement of sliding plate 127 in the direction A, cartridge holder 124 is shifted downwardly to locate the cartridge 1 in the loaded position, in which alignment pins 122 engage the alignment holes 17a and 17b on the bottom face 2e, and at the same time, a reference pin 123 becomes in contact with the bottom face 2e, and furthermore, the disk motor 119 engages the optical disk 4, and optical head 121 directly faces the optical disk 4 through openings 8 and 8', as shown in Fig. 4. Then, the optical head is inserted into the head opening 8 and reading/writing is enabled. When reading/writing is completed, the disk cartridge is ejected from the disk drive unit and resumed with the head opening covered to prevent the entry of dust and other foreign matter.

To eject the disk cartridge from the disk drive unit, a release button 130 of the slide plate 127 is pressed, causing the slide plate 127 to move in the direction B resulting in lift up of the cartridge holder 124 by the reaction force applied to guide pin 126 through the slots 128. Then, by the biasing force of the spring 141, the control plate 136 returns back to the initial position so that the edge 138 is located under the cartridge holder 124. During such procedures, the release flange 137 of the control plate 136 pushes and ejects the disk cartridge housing 1 from the cartridge housing 124.

As described hereinabove, since the opening 8, according to the present invention is formed in a diagonal direction extending from the center of the opening 7 for receiving the motor axis and the turn table towards a corner of the rectangular disk cartridge, a disk cartridge according to the present invention can provide a larger size opening for the head when compared with that formed in the conventional disk cartridge. Thus, it is possible to use an optical head of a relatively great size.

Furthermore, according to the present invention, since the shutter 10 is tapered towards its free end 11b, shutter 10 can be formed easily without providing any guide means at the tapered end, resulting in compact, cost effective disk cartridge. Also, the structure of the optical disk drive can be simplified.

Second embodiment

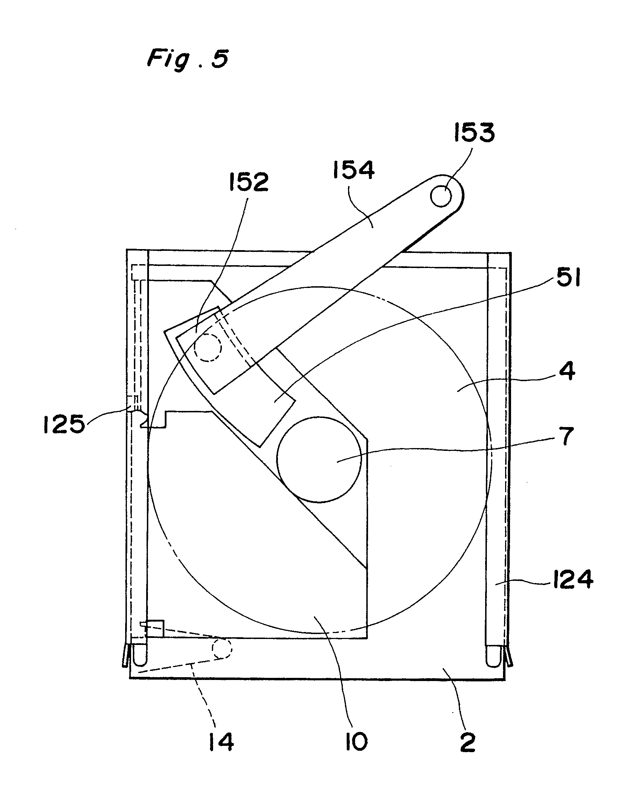

Referring to Fig. 5, a disk cartridge according to a second embodiment of the present invention is shown which differs from the first embodiment in the arrangement of the head opening 51 formed in the bottom half housing 2. The head opening 51 shown in Fig. 5 is arced and extend diagonally such that a chord subtending the arc is approximately parallel to a line extending from a center of motor opening and a corner of the disk cartridge housing and that one end of arced opening 51 is located adjacent to the motor opening 7, and the other end thereof is located adjacent to the corner of the disk cartridge housing. The radius of the arc is equal to the length of an arm 154 which carries an optical head 152 at its one end and is pivotally connected to a disk driving unit by a pivot shaft 153. Such a length of the arm 154 is suitably determined by the size of the disk cartridge housing and also by the size and arrangement of the disk driving unit.

Since the arced head opening 51 extends diagonally, the pivotal shaft 153 can be located relatively close to the disk cartridge housing 1 when compared with the arced head opening that might be formed in other positions. Thus, the arm which is long enough to provide a large curvature of the arc to keep the turning angle of the optical head within the tolerable range, can be arranged in a small space, resulting in the compact size of the disk driving unit.

Third embodiment

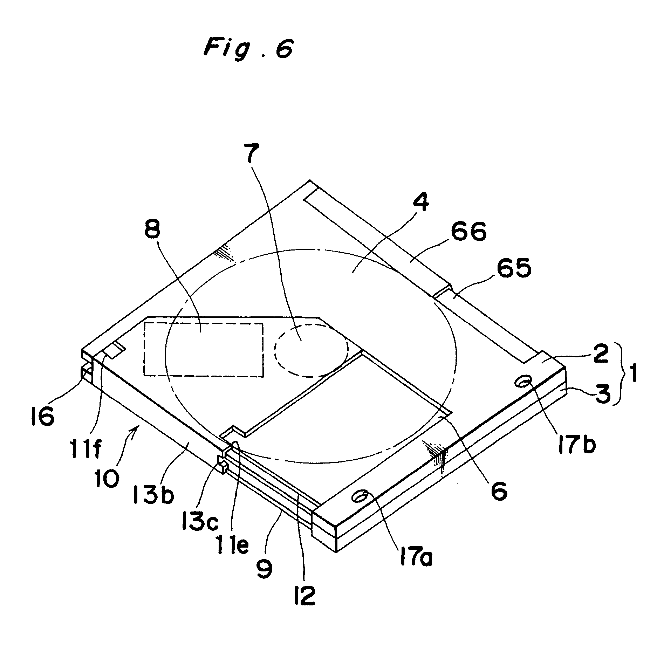

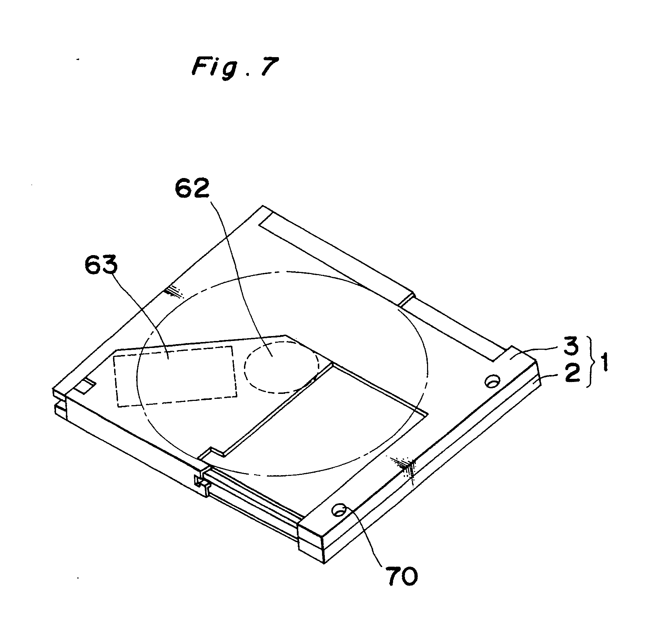

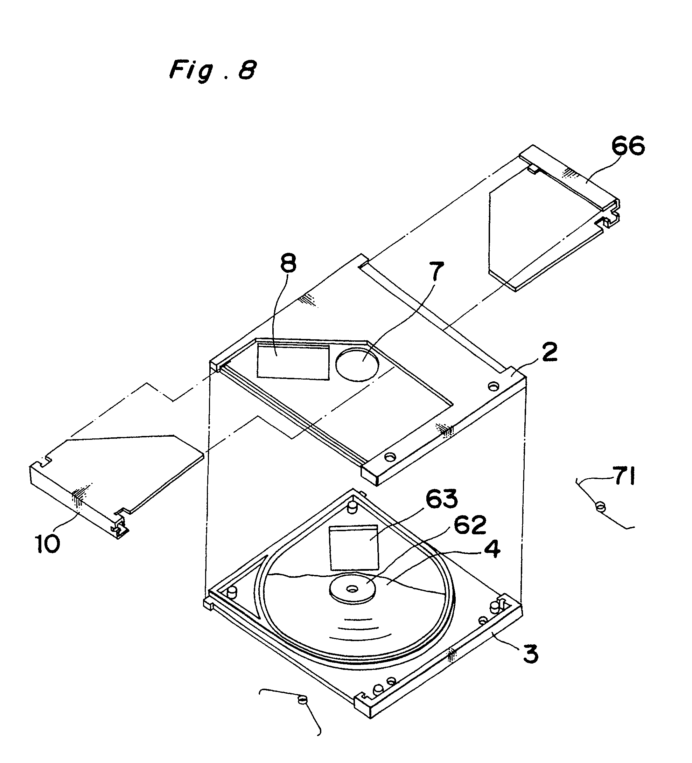

Referring to Figs. 6, 7 and 8 a disk cartridge according to a third embodiment of the present invention is shown. When compared with the first embodiment, the third embodiment has the top half housing 3 arranged very similar to the bottom half housing 2. More specifically, according to the third embodiment, the diagonally extending head opening 63 is further formed in the top half housing 3 in a similar manner to the head opening 8 formed in the bottom half housing 2, as best shown in Fig. 8, in such a manner that the angle contained between the elongated head openings 8 and 63 is approximately equal to 90°, and head opening 63 extends towards a corner which is away from the side provided with guide channel 12 in bottom half housing 2. Furthermore, motor opening 62 is formed approximately at the center of the top half housing 3. Also a shutter 66 is further provided to open and close the openings 62 and 63 in a similar manner to shutter 10, and is normally urged to the close position by a spring 71.

The disk cartridge according to the third embodiment can be used not only in a disk driving unit described above in connection with Fig. 3, but also in a disk driving unit which has two optical heads located above and below the inserted disk cartridge in offset relationship with each other.

In the former case, the disk cartridge can be inserted in the disk driving unit with either one of the opposite faces facing downwardly for the data reading and writing, since head openings 8 and 63 are spaced approximately 45° from a center line in opposite directions, respectively.

Fourth embodiment

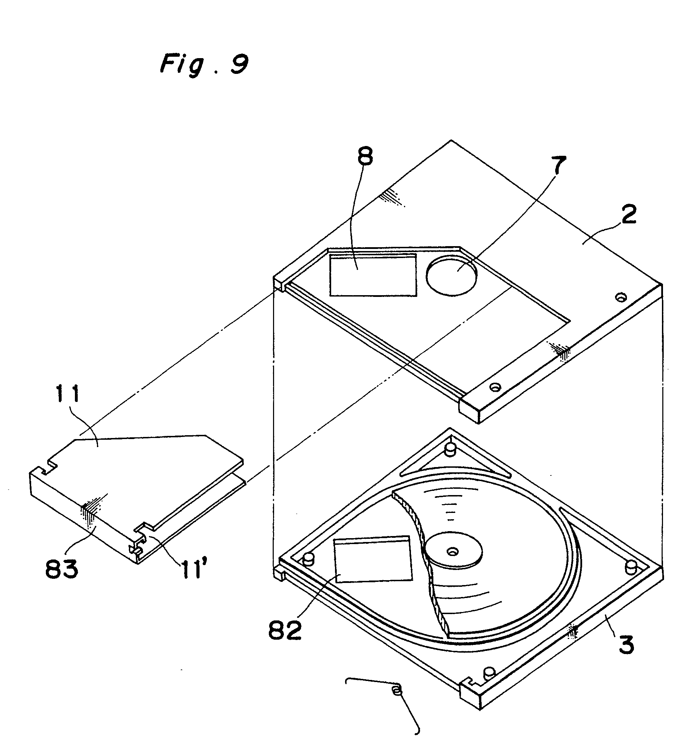

Referring to Fig. 9 a disk cartridge according to a fourth embodiment of the present invention is shown. When compared with the third embodiment, the fourth embodiment has the head opening 82 located in alignment with the head opening 8 via optical disk 4. Thus, the shutter 83 is so arrange to have two covering plates 11 and 11'.

The disk cartridge according to the third embodiment can be used particularly in a disk driving unit which has two optical heads located above and below the inserted disk cartridge in alignment with each other.

In any one of the embodiments described above, the diagonally extending head opening can be provided to any one of the four diagonally extending directions that extend from the center of the motor opening 7.

Furthermore, the optical disk provided in the disk cartridge can be any other type of recording medium, such as a magnetic disk, in which case, the recording head in the disk driving unit should be changed to magnetic head.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

**Claims**

1. A disk cartridge comprising:
a rectangular flat housing (1) having first and second flat walls (2, 3);
a disk shaped recording medium (4) rotatably provided in said rectangular flat housing (1);
said first wall (2) having a first opening (7) formed approximately at the center thereof so as to have an access to a center of said recording medium (4), and a second opening (8) of elongated configuration formed in a space between said first opening (7) and one of four corners of said rectangular flat housing (1) so as to have an access to said recording medium (4) along a radial direction thereof; and a shutter member (10) having a covering portion (11) which extends partly over outer surface of said first wall (2) and a holding portion (13a, 13b) slidably engaged on a first side of said rectangular flat housing (1), said shutter member (10) being arranged to move between a close position in which said covering portion (11) covers said first and second openings (7, 8) and an open position in which said covering portion (11) uncovers said first and second openings (7, 8).

2. A disk cartridge according to Claim 1, wherein said covering portion (11) is tapered towards a free end which is remote from holding portion (13a, 13b).

3. A disk cartridge according to Claim 1, wherein said rectangular flat housing (1) is formed with a groove (16) along said first side.

4. A disk cartridge according to Claim 1, wherein said second opening (8) is a rectangular opening.

5. A disk cartridge according to Claim 1, wherein said second opening (8) is an arced opening.

6. A disk cartridge according to Claim 1, wherein said second wall (3) has a third opening (62) formed approximately at the center thereof so as to have an access to a center of said recording medium (4), and a fourth opening (63) of elongated configuration formed in a space between said third opening (7) and one of four corners of said rectangular flat housing (1) so as to have an access to said recording medium (4) along a radial direction thereof; and further comprising a second shutter member (66) having a covering portion which extends partly over outer surface of said second wall (3) and a holding portion slidably engaged on second side opposite to said first side of said rectangular flat housing (1), said second shutter member (66) being arranged to move between a close position in which said covering portion covers said third and fourth openings (62, 63) and an open position in which said covering portion uncovers said third and fourth openings (62, 63).

7. A disk cartridge according to Claim 6, wherein said second and fourth openings (8, 63) are offset in such a manner that an angle contained between the elongated second and fourth openings (8, 63) is approximately equal to $90°$.

8. A disk cartridge according to Claim 1, wherein said second wall (3) has a third opening (62) formed approximately at the center thereof so as to have an access to a center of said recording medium (4), and a fourth opening (63) of elongated configuration formed in a space between said third opening (7) and said one of four corners of said rectangular flat housing (1) so as to have an access to said recording medium (4) along a radial direction thereof, said second and fourth openings (8, 63) being aligned with each other via said recording medium (4); and further comprising a double shutter member (83) having two covering portions (11, 11,) which extend partly over outer surface of said second wall (3) and partly over outer surface of said first wall (2), respectively, and a holding portion slidably engaged on said first side of said rectangular flat housing (1), said double shutter member (83) being arranged to move between a close position in which said covering portions cover said first, second, third and fourth openings and an open position in which said covering portion uncovers said first, second, third and fourth openings.

Fig. 1a

Fig. 1b

8

Fig. 1c

Fig. 1d

*Fig . 2*

*Fig . 3*

Fig. 4

Fig . 5

## Fig . 6

*Fig . 7*

*Fig . 8*

# Fig. 9